# EUROPÄISCHE PATENTSCHRIFT

(11) **EP 2 714 457 B1**
(45) Veröffentlichungstag und Bekanntmachung des Hinweises auf die Patenterteilung: **13.09.2017**
(21) Anmeldenummer: 12725681.6
(22) Anmeldetag: 23.05.2012
(51) Int. Cl.: B60L 5/19, B60L 5/36, B60L 5/08

(54) **NICHT SCHIENENGEBUNDENES FAHRZEUG MIT EINEM STROMABNEHMER**
NON-RAIL-BOUND VEHICLE
VÉHICULE NON FERROVIAIRE

(30) Priorität: 27.05.2011 DE 102011076615
(43) Veröffentlichungstag der Anmeldung: 09.04.2014
(73) Patentinhaber: Siemens Aktiengesellschaft, 80333 München (DE)
(72) Erfinder: KINNEMANN, Georg, 15741 Bestensee (DE); ZINKEN, Thomas, 53894 Mechernich (DE); SACHSE, Thomas, 83052 Bruckmühl (DE); DRONNIK, Andrej, 12489 Berlin (DE); KEIL, Göran, 12529 Schönefeld (DE); RISTER, Stephan, 90469 Nürnberg (DE)
(86) Internationale Anmeldenummer: PCT/EP2012/059607
(87) Internationale Veröffentlichungsnummer: WO 2012/163761

(56) Entgegenhaltungen:
- WO-A2-2011/015724
- DE-A1- 2 600 158
- DE-A1-102007 016 841
- GB-A- 2 463 701

## Beschreibung

Die Erfindung bezieht sich auf ein nicht schienengebundenes Fahrzeug nach dem Oberbegriff des Patentanspruches 1.

Es ist hinlänglich bekannt, schienengebundene Fahrzeuge, wie zum Beispiel elektrische Lokomotiven, Züge und Straßenbahnen, zur Traktionsversorgung mit Stromabnehmern auszustatten, die zur Einspeisung elektrischer Energie in das Fahrzeug einen Fahrdraht einer Fahrleitungsanlage beschleifen. Durch die Spurführung der Schienen kann eine definierte Relativlage zwischen dem wenigstens einen Fahrdraht und dem Schienenfahrzeug eingehalten werden, die im Normalbetrieb eine sichere Aufrechterhaltung eines Schleifkontakts zwischen Stromabnehmer und Fahrdraht ermöglicht. Weit weniger verbreitet ist die externe Energieeinspeisung in elektrisch betriebene Fahrzeuge, die nicht schienengebunden sind.

So ist beispielsweise aus der Patentschrift DE 32 44 945 C1 ein doppelpoliges Oberleitungssystem für elektrisch angetriebene Fahrzeuge des öffentlichen Personennahverkehrs bekannt. Von den zwei parallel verlaufenden Oberleitungsdrähten ist einer gegenüber Erde spannungsführend und der andere dient als Nullleiter. Ein O-Bus ist mit einem Paar von Stangenstromabnehmern ausgerüstet, um in dem Oberleitungssystem verkehren zu können. Im Betrieb nimmt das Paar von Stangenstromabnehmern einen gegenüber der Horizontalen angestellten Zustand ein, in dem ihre Gleitschuhe ordnungsgemäß an den beiden Oberleitungsdrähten anliegen. Die Stromabnehmerstangen stehen unter der Kraft einer Aufrichtfeder, die für den nötigen Andruck der Gleitschuhe an die Oberleitungsdrähte sorgt. Die Stangenstromabnehmer sind am Dach des O-Busses um eine horizontale und quer zur Fahrtrichtung verlaufende Achse angelenkt, um abgesenkt und wieder hochgefahren werden zu können. Zur Kompensation von seitlichen Fahrabweichungen relativ zum Verlauf der Oberleitungsdrähte sind die Stangenstromabnehmer auch um eine vertikale Achse drehbar, um den Gleitkontakt zu den Oberleitungsdrähten halten zu können. O-Busse sind jedoch spurgebundene Fahrzeuge, da starke Ausweichmanöver oder Überholmanöver, die ein Verlassen der Fahrspur bedingen, zu einem Kontaktverlust der Stangenstromabnehmer mit den Oberleitungsdrähten führt.

Die Offenlegungsschrift DE 102 56 705 A1 offenbart ein nicht schienengebundenes Fahrzeug, wie sie als Lastwagen im Tagebau zum Transport von Erz, Kohle oder Abraum eingesetzt werden. Zur Versorgung eines Elektromotors des Fahrzeugs sind zwei Pantografen vorhanden, die im Betrieb über Schleifleisten mit Fahrdrähten einer zweipoligen Oberleitung in Kontakt stehen. Damit das Fahrzeug stets nur so gelenkt wird, dass die Schleifleisten die Fahrdrähte nicht verlassen, sind an den Pantografen Sensorleisten angeordnet, die Magnetfeldsensoren tragen. Diese bestimmen die magnetische Feldstärke des vom Strom im Fahrdraht erzeugten Magnetfeldes so genau, dass aus dem gemessenen Feldstärkewert der Abstand des Sensors zum Fahrdraht bestimmt werden kann. Die Information über die Position des Sensors relativ zum Fahrdraht und damit über die Position des Pantografen und damit des gesamten Fahrzeugs zum Fahrdraht kann mittels einer Anzeigeeinheit dem Fahrzeugführer mitgeteilt werden, so dass dieser sofort geeignete Lenkbewegungen ausführen kann. Es ist auch möglich, die Informationen der Sensoren einer Steuereinheit für eine automatische Lenkung des Fahrzeuges zuzuführen.

Aus der DE 692 15 698 T2 ist ein Stromabnehmer für eine automatische und sichere Handhabung der Stromzufuhr bei einem Oberleitungsbus bekannt. Der Stromabnehmer hat Kontaktschuhe, die isoliert auf einem Balken montiert sind. Der Balken ist entlang der hinteren Seite eines ebenen Parallelogramms, das durch zwei Träger gebildet wird, gelagert. Dessen vordere Seite ist im rechten Winkel gegen die Längsrichtung des Fahrzeugs gelagert, wodurch die hintere Seite beidseitig und nahezu quer zum Fahrzeug herausgeführt werden und von horizontaler Lage zur Höhe des Leitungspaares angehoben werden kann.

Der Balken des Stromabnehmers steht dabei immer im rechten Winkel zur Längsrichtung des Fahrzeugs. Mittels Detektoren wird das Risiko einer Entgleisung des Stromabnehmers vom Leitungspaar aufgrund eines zu großen Abstandes des Fahrzeugs zum Leitungspaar vermindert. Hierzu sind die Träger mit Gebern versehen, die angeben, wenn der Stromabnehmer links oder rechts im Lager des Balkens in den Trägern drückt. Die Geber steuern ein Treibgerät zum Herausdrehen des Stromabnehmers so an, dass während eines vorausbestimmten Zeitabschnitts versucht wird, den Druck des Stromabnehmers seitlich auf das Leitungspaar auf Null zu regeln.

Die Offenlegungsschrift DE 25 00 121 A1 zeigt eine Anordnung bei einer Stromversorgungsanlage für nicht schienengebundene Fahrzeuge mit Stromabnehmern. Sie besteht aus einer Gleichstrom erzeugenden Vorrichtung sowie im Wesentlichen parallel verlaufenden Fahrleitungen für die Stromabnehmer. Die Anordnung schafft einen von den Stromabnehmern unabhängigen, die Fahrleitungen umfassenden Stromkreis, der von einem Wechselstrom durchflossen wird. Durch den überlagerten Wechselstrom wird um die Fahrleitungen herum ein magnetisches Feld erzeugt, welches von Messgliedern am Stromabnehmer als Suchfeld ausgenutzt wird. Hierdurch ist eine automatische Steuerung der Stromabnehmer zu den Fahrleitungen möglich.

Die internationale Veröffentlichung WO 2011/015724 A2 offenbart ein nicht schienengebundenes Fahrzeug nach dem Oberbegriff des Anspruchs 1 und eine Vorrichtung zum Verbinden eines elektrischen Fahrzeugs mit einer Oberleitung und zur Stromversorgung dieses Fahrzeugs mit dem in der Oberleitung fließenden elektrischen Strom. Das Fahrzeug bewegt sich auf einem Boden und die Oberleitung ist in einer ersten Ebene angeordnet, die im Wesentlichen parallel zum Boden in einem Abstand davon verläuft, der größer ist als die maximale Höhe des auf dem Boden fahrenden Fahrzeugs. Die Vorrichtung umfasst eine erste Platte, erste steuerbare Mittel, um die erste Platte parallel zu sich selbst und relativ zum Fahrzeug und in einer zweiten Ebene zu bewegen, die im Wesentlichen parallel zur ersten Ebene verläuft. Sie umfasst ferner einen Drehzapfen sowie Mittel, um den Drehzapfen um eine erste Achse drehbar auf die erste Platte zu montieren, wobei die erste Achse im Wesentlichen senkrecht zur zweiten Ebene verläuft. Die Vorrichtung umfasst zweite steuerbare Mittel, um den Drehzapfen relativ zur ersten Platte um die erste Achse zu verschwenken. Sie umfasst außerdem eine zweite Platte sowie dritte steuerbare Mittel, um die zweite Platte parallel zu sich selbst und relativ zum Drehzapfen und in einer dritten Ebene zu bewegen, die die erste Achse enthält. Die Vorrichtung umfasst einen Stromabnehmerbügel mit einer Schleifleiste zur Stromabnahme, wobei die Schleifleiste zum Beschleifen der Oberleitung geeignet ist. Ferner umfasst die Vorrichtung Mittel, um den Stromabnehmerbügel so auf die zweite Platte zu montieren, dass die Schleifleiste zur Stromabnahme im Wesentlichen parallel zur ersten und zweiten Ebene verläuft.

Die von O-Bussen bekannten Stangenstromabnehmer leiden unter dem Nachteil, dass ein An- und Abdrahten von Fahrzeugen relativ schwierig ist und dass bei ruckartigen Lenkbewegungen es zu so genannten Stangenentgleisungen, d.h. zu einem Kontaktverlust der Gleitschuhe von den Oberleitungsdrähten, kommen kann. Damit ist dieses System ungeeignet für Fahrbahnen, die eine wenigstens streckenweise elektrifizierte Fahrspur aufweisen, zu der parallel nicht elektrifizierte Fahrspuren - beispielsweise auf mehrspurigen Autobahnen - verlaufen. Schließlich sind Stangenstromabnehmer auch unsicher bei höheren Fahrgeschwindigkeiten von 80 bis 100 km/h, wie sie von Nutzfahrzeugen auf Autobahnen gefahren werden dürfen.

Die von Tagebaufahrzeugen bekannten Lösungen mit je einem Stromabnehmer pro Fahrdraht haben auch den Nachteil, dass größere seitliche Fahrzeugbewegungen von über 0,4 m zu einem Kontaktverlust mit der Oberleitung führen können. Um solche Kontaktverluste zu vermeiden, kann die Stromabnehmeranordnung auch breiter als das Fahrzeug gestaltet werden, was auf öffentlichen Straßen außerhalb eines Tagebauareals gefährlich und gemäß Straßenverkehrsordnung nicht erlaubt ist.

Der Erfindung liegt daher die Aufgabe zugrunde, ein gattungsgemäßes Fahrzeug bereitzustellen, dessen Stromabnehmer beim Betrieb auf mehrspurigen Fahrbahnen mit einer wenigstens abschnittsweise elektrifizierten Fahrspur auch bei höheren Fahrgeschwindigkeiten von beispielsweise 80 bis 100 km/h sicher an- und abdrahtbar ist und zuverlässig den Kontakt zum Fahrdraht halten kann.

Die Aufgabe wird erfindungsgemäß gelöst durch ein nicht schienengebundenes Fahrzeug der eingangs genannten Art mit den im kennzeichnenden Teil des Patentanspruches 1 angegebenen Merkmalen. Das nicht schienengebundene Fahrzeug umfasst demnach einen Stromabnehmer zur Einspeisung elektrischer Energie aus einer wenigstens einen Fahrdraht aufweisenden Oberleitungsanlage. Der Stromabnehmer weist mindestens eine Schleifleiste mit einem Arbeitsbereich zur Kontaktierung des wenigstens einen Fahrdrahtes auf. Der Stromabnehmer ist mit Aktormitteln zum Verstellen der mindestens einen Schleifleiste gekoppelt, wobei die mindestens eine Schleifleiste waagerecht verläuft und quer zu einer Fahrzeuglängsachse verstellbar ist. Sensormittel dienen zur Erfassung der Lage, insbesondere der Abweichung aus einer Oberleitungsmitte, des Fahrzeug relativ zum wenigstens einen Fahrdraht. Eine mit den Sensormitteln und den Aktormitteln verbundene Steuereinrichtung ist dazu ausgebildet, die Aktormittel in Abhängigkeit eines Vergleichs der von den Sensormitteln erfassten Fahrzeuglage derart anzusteuern, dass die mindestens eine Schleifleiste den Kontakt zum wenigstens einen Fahrdraht innerhalb ihres Arbeitsbereiches hält. Die Aktormittel weisen einen Stellantrieb und eine linear geführte Stellstange auf, wobei die Stellstange mit dem Stromabnehmer gekoppelt und mittels des Stellantriebes quer zur Fahrzeuglängsachse verschiebbar ist. Hierdurch kann die Stellbewegung schnell und genau über robuste elektromechanische Bauteile ausgeführt werden. Die Stellstange kann beispielsweise einen Zahnstangenabschnitt aufweisen, der mit einem Zahnrad in Eingriff steht, welches mit einer Welle des Stellantriebes drehtfest verbunden ist. Der Arbeitsbereich einer Schleifleiste kann sich über einen Teil des länglichen Kohlekontaktstückes erstrecken. Sensormittel, Steuergerät und Aktormittel bilden somit
einen Regelkreis zur kontinuierlichen Nachführung der einen oder mehreren Schleifleisten des Stromabnehmers, wobei in Abhängigkeit der Ist-Lage des Fahrzeugs eine Stellgröße für die Aktormittel berechnet wird, anhand der eine fahrbedingte Abweichung von einer im Arbeitsbereich der Schleifleisten liegenden Soll-Lage durch Querverschiebung kompensiert wird. Die Verschiebbarkeit der Schleifleisten quer zur Fahrzeuglängsachse kann durch geeignete Anordnung und Anlenkung des Stromabnehmers am Fahrzeug erreicht werden. So gleicht die aktive Stromabnehmersteuerung Ungenauigkeiten in der Spurführung durch den Fahrzeugführer innerhalb gewisser Grenzen automatisch aus, wodurch die Aufrechterhaltung des Schleifkontaktes zwischen Stromabnehmer und Fahrdraht auch bei höheren Fahrzeuggeschwindigkeiten sowie leichten Ausweichmanövern sichergestellt ist.

In einer vorteilhaften Ausführungsform des erfindungsgemäßen Fahrzeugs weist der Stromabnehmer zwei Tragholme auf, welche derart drehbar am Fahrzeug angelenkt sind, dass sie in einer gemeinsamen Schwenkebene geführt quer zur Fahrzeuglängsachse schwenkbar sind, wobei die Tragholme gelenkig mit einer die mindestens eine Schleifleiste tragenden Wippe verbunden sind. Hierdurch wird eine stabile Rahmenkonstruktion des Stromabnehmers bereitgestellt, die in einer Schwenkebene quer zur Fahrtrichtung gerichtete Schwenkbewegungen ausführt, um seitliche Lenkbewegungen des Fahrzeugs kompensieren zu können. Die Schwenkebene steht zur Fahrzeuglängsachse im Wesentlichen senkrecht. Hierdurch können die Schleifleisten des Stromabnehmers sicher den Kontakt zur Oberleitung halten.

In einer vorteilhaften Ausgestaltung des erfindungsgemäßen Fahrzeugs weisen die Aktormittel eine Messeinrichtung zur Bestimmung einer Aktorstellung auf, wobei die Steuereinrichtung mit der Messeinrichtung verbunden ist, um die Aktormittel auch in Abhängigkeit der bestimmten Aktorstellung anzusteuern. Durch die zusätzliche Information über die momentane Aktorstellung, also beispielsweise über die Position der Stellstange oder den Drehwinkel einer Motorwelle, kann die Steuereinrichtung die relative Stellung der wenigstens einen Schleifleiste zum Fahrzeug bei der Ermittlung der erforderlichen Stellgröße berücksichtigen. So ist nicht bei jeder Fahrzeuglage oder Aktorstellung ein Stelleingriff über die Aktormittel nötig. Insbesondere ist es hierdurch möglich, die Sensormittel auf dem beweglichen Stromabnehmer, beispielsweise in der Nähe der Schleifleisten, anzuordnen, weil dabei unmittelbar die Lage der Schleifleisten relativ zu den Fahrdrähten erfasst werden kann.

In einer bevorzugten Ausführungsform des erfindungsgemäßen Fahrzeugs ist die Steuereinrichtung dazu ausgebildet, die Aktormittel derart anzusteuern, dass die mindestens eine Schleifleiste über ihren Arbeitsbereich pendelnd verstellt wird. Um eine gleichmäßige Abnutzung der Kontaktstücke der Schleifleisten zu erzielen, kann die Steuereinrichtung während des Betriebes des erfindungsgemäßen Fahrzeugs den Stromabnehmer so periodisch hin- und herstellen, dass eine Schleifleiste den Fahrdraht auf ihrem gesamten Arbeitsbereich gleichmäßig beschleift. Im Ergebnis entspricht diese Stellbewegung der Schleifleisten der Zickzackführung eines Fahrdrahtes einer herkömmlichen Oberleitungsanlage, auf die durch die Stellmöglichkeiten erfindungsgemäßer Fahrzeuge verzichtet werden könnte.

In einer weiteren vorteilhaften Ausführungsform des erfindungsgemäßen Fahrzeugs ist die Steuereinrichtung mit einem Fahrerassistenzsystem verbunden, durch welches in Abhängigkeit der bestimmten Aktorstellung und/oder der erfassten Fahrzeuglage eine Lenkempfehlung an einen Fahrer ausgebbar ist und/oder ein automatischer Lenkeingriff vornehmbar ist. So könnte bei kritischer Annäherung einer Grenze des Arbeitsbereiches einer Schleifleiste und/oder bei kritischer Abweichung des Fahrzeugs von der Fahrbahnmitte bzw. von der Oberleitungsmitte durch das Fahrerassistenzsystem ein akustisches und/oder optisches Warnsignal mit einer Handlungsempfehlung zum Gegenlenken ausgegeben werden. Es ist auch möglich bei Fahrzeugen mit einem automatischen Lenkassistenten, diesen zur Spurführung längs der Oberleitungsanlage mit der Steuereinrichtung zu koppeln, um einen automatischen Lenkeingriff vornehmen zu lassen.

In einer anderen bevorzugten Ausgestaltung des erfindungsgemäßen Fahrzeugs weisen die Sensormittel wenigstens ein Messgerät zur Bestimmung einer Feldstärke eines vom wenigstens einen Fahrdraht erzeugten physikalischen Feldes, insbesondere eines magnetischen Feldes oder eines elektrischen Feldes oder eines elektromagnetischen Wechselfeldes, auf. Mit Vorteil wird hier die Oberleitungsanlage, die primär zur Energieversorgung erfindungsgemäßer Fahrzeuge vorgesehen ist und in deren Fahrdrähte deshalb elektrische Energie eingespeist wird, zur Erzeugung eines physikalischen Feldes verwendet. Messgeräte zur Feldstärkebestimmung elektromagnetischer Felder sind mit hinreichender Messgenauigkeit und -reichweite kostengünstig am Markt verfügbar, um über den Feldstärkewert am Ort oder an den Orten der Sensormittel ein Maß für den Abstand zum Fahrdraht oder zu den Fahrdrähten zu gewinnen. Daraus lässt sich die Relativlage des Fahrzeugs zur Oberleitungsanlage ableiten.

Vorzugsweise ist das physikalische Feld durch die Energieeinspeisung in die Oberleitungsanlage zur Traktionsversorgung des Fahrzeugs erzeugt. Das ohnehin bei Gleichspannungsversorgung um die Fahrdrähte ausgebildete elektrische und magnetische Feld oder das bei Wechselspannungsversorgung abgestrahlte elektromagnetische Wechselfeld kann durchaus ausreichen, um durch fahrzeugseitige Ausmessung dessen Feldstärke Informationen über die Relativlage von Fahrzeug zu Oberleitungsanlage zu gewinnen. Es sind oberleitungsseitig keine weiteren Maßnahmen zu treffen. Bei Gleichspannungen können mit Vorteil auch die in dieser als Restwelligkeiten vorhandenen Wechselspannungsanteile verwendet werden, um das physikalische Messfeld zu erzeugen.

Weiter vorzugsweise ist das physikalische Feld durch zusätzlich in den wenigstens einen Fahrdraht eingeprägte Spannungen oder Ströme erzeugt ist. Zur Verbesserung der messbaren Feldstärkewerte können der Traktionsspannung überlagerte höherfrequente Spannungen bzw. Ströme aufgeprägt werden.

Desweiteren ist das physikalische Feld vorzugsweise durch an der Oberleitungsanlage angeordnete Sendeeinheiten erzeugt. Derartige Sendeeinheiten können eingesetzt werden, wenn hochfrequente Spannungen bzw. Ströme im MHz- bzw. GHz-Bereich aufgeprägt werden, da diese wegen der Abstrahlung eine nur geringe Reichweite haben.

In einer weiteren vorteilhaften Ausgestaltung des erfindungsgemäßen Fahrzeugs ist der Stromabnehmer zur Einspeisung elektrischer Energie aus einer zwei Fahrdrähte aufweisenden Oberleitungsanlage ausgebildet, wobei die Sensormittel zwei in einem Querabstand angeordnete Messgeräte zur Feldstärkebestimmung aufweisen, wobei der Querabstand verschieden vom Abstand zwischen den Fahrdrähten ist. Der Querabstand kann kleiner oder größer als der Fahrdrahtabstand gewählt werden. Wenn sich das Fahrzeug mittig unter zwei Fahrdrähten einer zweipoligen Oberleitungsanlage befindet, sind die von den beiden Messgeräten gemessenen Feldstärkewerte gleich groß. Außerhalb der Mitte sind die Feldstärkewerte unterschiedlich. Dadurch läst sich erreichen, dass die Sensormittel erkennen können, ob das Fahrzeug zu weit nach links oder zu weit nach rechts von der Oberleitungsmitte abweicht.

Weitere Vorteile und Eigenschaften des erfindungsgemäßen Fahrzeugs ergeben sich aus nachfolgender Beschreibung eines Ausführungsbeispiels, welches anhand der Zeichnungen näher erläutert wird, in deren
- FIG 1: ein erfindungsgemäßes Fahrzeug in Richtung der Fahrzeuglängsachse,
- FIG 2: die gegenseitige Lage zweier Fahrdrähte und der Sensormittel des Fahrzeugs nach FIG 1 und
- FIG 3: der Verlauf der Feldstärke des von zwei Fahrdrähten erzeugten Magnetfeldes in unterschiedlichen Höhen unterhalb der Fahrdrähte
schematisch veranschaulicht sind.

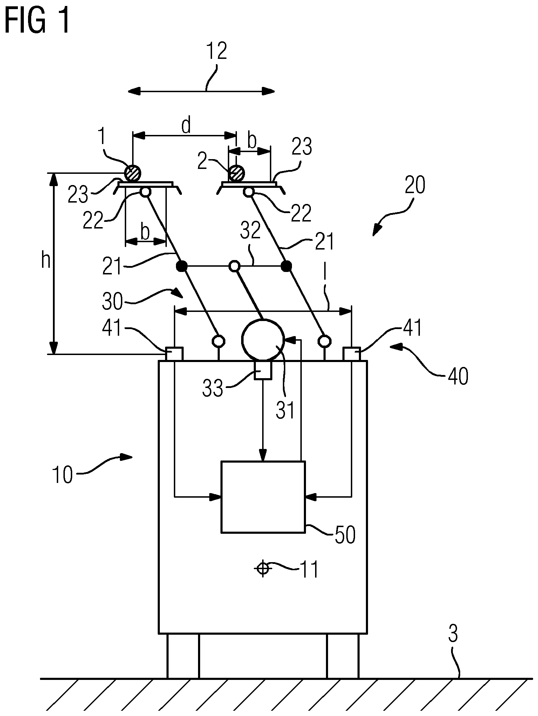

Gemäß FIG 1 ist eine zweipolige Oberleitungsanlage mit einem Hinleiter 1 und einem zu diesem parallel verlaufenden Rückleiter 2 zur Elektrifizierung einer Fahrspur 3 vorgesehen. Hin- und Rückleiter 1 bzw. 2 der Oberleitungsanlage werden im Folgenden auch einzeln Fahrdraht oder zusammen Fahrdrähte genannt. Sie sind mittels nicht dargestellter Infrastruktureinrichtungen, wie Masten, Ausleger, Seitenhalter, Tragseile, Hänger und dergleichen, etwa mittig oberhalb der Fahrspur 3 angeordnet. Die Fahrspur 3 kann beispielsweise die rechte Fahrspur einer mehrspurigen Autobahn sein. Hierdurch ist es möglich, in Fahrzeuge 10 mit einem Stromabnehmer 20 elektrische Energie einzuspeisen, um einem Elektro- oder Hybridantrieb des Fahrzeugs 10 Traktionsenergie bereitzustellen oder um Bremsenergie des Fahrzeugs 10 an die Oberleitungsanlage abzuführen.

Der Stromabnehmer 20 ist bezüglich einer Fahrzeuglängsachse 11 des Fahrzeugs 10 hinter einer Fahrerkabine und vor einem Ladeaufbau angeordnet, die nicht im Detail dargestellt sind. Der Stromabnehmer 20 weist zwei im Wesentlichen vertikal angeordnete Tragholme 21 auf, die an ihren unteren Enden am Fahrzeug 10 angelenkt sind und an ihren oberen Enden eine Wippe 22 tragen. Die Tragholme 21 liegen in einer Schwenkebene 12, die im Wesentlichen senkrecht zur Fahrzeuglängsachse 11 und zwischen Fahrerkabine und Aufbau liegt. In dieser Schwenkebene 12 können demnach die Wippen 22 seitliche, also im Wesentlichen horizontale und quer zur Fahrzeuglängsachse 11 verlaufende Schwenkbewegungen 12 ausführen, um die auf der Wippe 22 angeordneten Schleifleisten 23 in Schleifkontakt zu den Fahrdrähten 1 bzw. 2 zu halten.

Der Stromabnehmer 20 weist zwei parallel ausgerichtete Tragholme 21 auf, die über je ein Schwenkgelenk drehbar am Fahrzeug 10 angelenkt sind. Die Schwenkgelenke erlauben eine Drehbewegung der Tragholme 21 in einer gemeinsamen Schwenkebene 12, die in FIG 1 durch die Zeichenebene gebildet ist; die Drehachsen der Schwenkgelenke erstrecken sich also parallel zur Fahrzeuglängsachse 11. Die Tragholme 21 können nicht dargestellte Stellzylinder aufweisen, um sie teleskopartig aus- bzw. einfahren zu können. Die Tragholme 21 tragen je eine horizontal angeordnete und quer zur Fahrzeuglängsachse 11 verlaufende Wippen 22, die über Drehgelenke mit den oberen Enden der Kolbenstangen der Stellzylinder verbunden sind. Die Wippen 22 umfassen je zwei in Fahrtrichtung hintereinander angeordnete und über Federungen gelagerte Schleifleisten 23, auf welchen Kontaktstücke angebracht sind und an deren seitlichen Enden nach unten geneigte Auflaufhörner angeordnet sind. Jedes Paar hintereinander angeordneter Schleifleisten 23 beschleift einen der Fahrdrähte 1 bzw. 2. Die Wippen 22 sind um eine horizontale und quer zur Fahrzeuglängsachse 11 verlaufende Wippachse drehbar, um Verkantungen beim Auflaufen einer Schleifleiste 23 auf ein Hindernis am Fahrdraht 1 bzw. 2 nachgeben zu können.

Die beiden Tragholme 21 sind durch eine horizontale, in der Schwenkebene 12 linear geführte Stellstange 32 verbunden. Die Stellstange 32 ist mittels eines Stellantriebes 31, der als Linearantrieb mit Getriebe ausgeführt und am Fahrzeug 10 befestigt ist, quer zur Fahrzeuglängsachse 11 verschiebbar. Diese Stellbewegung wird über Koppelgelenke auf die Tragholme 21 übertragen. Die Stellgröße für die Stellbewegung wird über ein Regelsystem vorgegeben, zu dem Sensormittel 40 zur Erfassung der Lage des Fahrzeugs 10 relativ zu den Oberleitungsfahrdrähten 1 bzw. 2, durch Stellstange 32 und Stellantrieb 31 gebildete Aktormittel 30 und eine mit den Sensormitteln 40 und den Aktormitteln 30 verbundene Steuereinrichtung 50.

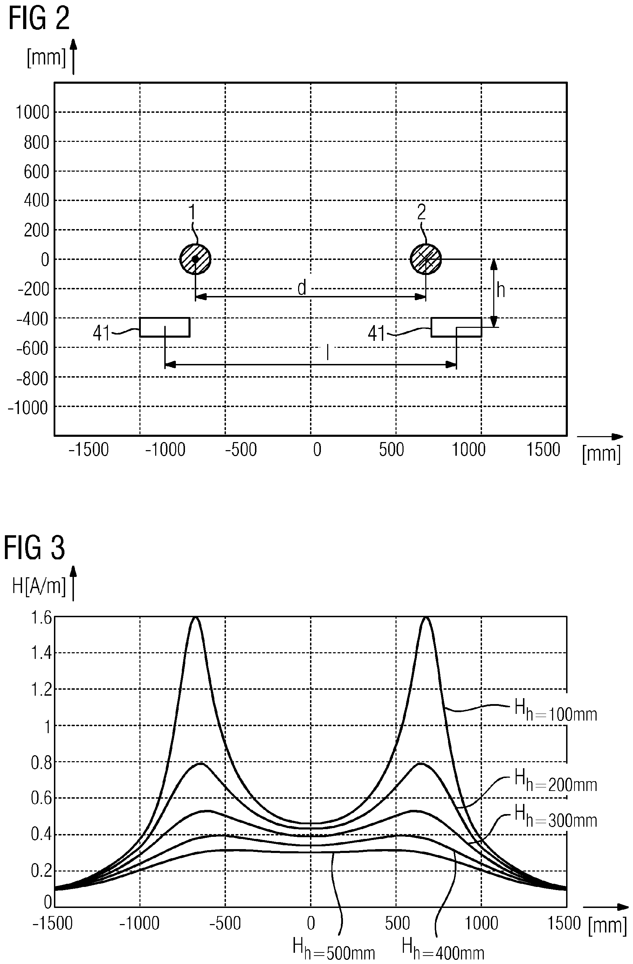

Die Sensormittel 40 können beispielsweise durch eine Videokamera mit Bildauswertung gebildet werden. Im dargestellten Ausführungsbeispiel umfassen die Sensormittel 40 jedoch zwei Messgeräte 41 zur Messung einer Magnetfeldstärke H des von den Fahrdrähten 1 bzw. 2 am Ort der Messgeräte 41 erzeugten Magnetfeldes. Das Magnetfeld wird beispielsweise durch die zur Traktionsversorgung in die Fahrdrähte 1 bzw. 2 eingeprägte Spannung bzw. Strom. Gemäß FIG 2 ist der Querabstand 1 der beiden Messgeräte 41 größer gewählt als der Abstand d der beiden Fahrdrähte 1 bzw. 2 voneinander. Für verschiedene Fahrdrahthöhen h, gemessen von den am Fahrzeugdach montierten Messgeräten 41, ergeben sich die in FIG 3 dargestellten Verläufe der Magnetfeldstärke H. Je geringer die Fahrdrahthöhe h gewählt wird, desto ausgeprägter sind die Maxima an den Positionen der Fahrdrähte 1 bzw. 2. Fährt das Fahrzeug 10 mittig unter den Fahrdrähten 1 bzw. 2, so messen beide Messgeräte 41 die gleichen Magnetfeldstärken H. Fährt das Fahrzeug 10 au-ßermittig, steigt die vom einen Messgerät 41 gemessene Magnetfeldstärke, während die vom anderen fällt und umgekehrt. So kann die Relativlage des Fahrzeugs 10 zur Oberleitungsanlage erfasst.

Die Aktormittel 30 umfassen ferner eine Messeinrichtung 33 zur Bestimmung einer Aktorstellung, beispielsweise die momentane seitliche Verschiebung der Stellstange 32, die wiederum einer eindeutigen Schleifleistenlage relativ zum Fahrzeug entspricht. Die Information der Aktorstellung und/oder der Fahrzeuglage wird fortwährend der Steuereinrichtung 50 zugeführt. In der Steuereinrichtung 50 steuert nun die Aktormittel 30 derart an, dass in Abhängigkeit der von den Sensormitteln 40 erfassten Fahrzeuglage die mindestens eine Schleifleiste 23 den Kontakt zum wenigstens einen Fahrdraht 1 bzw. 2 innerhalb ihres Arbeitsbereiches b hält. Die Steuereinrichtung 50 ermittelt somit, um welchen Weg die Wippe 22 seitlich verschwenkt werden muss, damit die Schleifleisten 23 die Fahrdrähte 1 bzw. 2 in ihrem Arbeitsbereich b beschleifen. Derartige Steuereingriffe können bei Fahrungenauigkeiten aber auch bei Ausweich- oder Überholmanöver erforderlich sein. Sie können auch erforderlich sein, wenn die Fahrdrähte 1 bzw. 2 nicht mittig oberhalb der Fahrspur 3 verlaufen, wie dies beispielsweise bei Fahrbahnkurven der Fall ist.

Da sich eine Wippe 22 und mit ihr die Schleifleisten 23 bei einer seitlichen Stellbewegung 12 leicht absenken, können die Stellzylinder ausgefahren werden, um diesen Höhenverlust auszugleichen. Ein Ein- bzw. Ausfahren der Stellzylinder ist auch von Vorteil, um die zwischen Masten durchhängenden Fahrdrähte 1 bzw. 2 mit gleichmäßigem Druck beschleifen zu können. Schließlich dient das Aus- bzw. Einfahren der Stellzylinder zum Andrahten bzw. Abdrahten, wenn das Fahrzeug 10 in die elektrifizierte Fahrspur 3 einfährt bzw. diese verlässt - etwa bei Einfahrten, Ausfahrten oder Kreuzen von Autobahnen sowie bei Überholmanövern oder bei Nothalten am Seitenstreifen. Zur Kompensation von Längsstauchungen weist jeder Tragholm 21 nicht dargestellte Federmittel auf, welche beispielsweise durch eine Luftfederung gebildet werden. Neben der dadurch erzielten Dämpfung können damit die Tragholme 21 zusätzlich auch angehoben und abgelassen werden. Um dabei kleine Federbewegungen und größere Hub- bzw. Senkbewegungen der Tragholme 21 und damit der Schleifleisten 23 zu übersetzen, ist ein Getriebe vorgesehen. Die Federmittel sind so ausgebildet, dass die Schleifleisten 23 stets mit konstanter Kraft gegen die Fahrdrähte 1 bzw. 2 drücken. Zur elektrischen Trennung zwischen Fahrzeug 10 und Stromabnehmer 20 sind die Tragholme 21 über je einen elektrischen Stützisolator mit dem Fahrzeug 10 verbunden, de nicht dargestellt ist.

Insgesamt ist der Stromabnehmer 20 zuverlässig an- und abdrahtbar und kann bei seitlichen Relativbewegungen zwischen Fahrzeug 10 und Oberleitungsanlage von bis zu 0,4 m sicher den Kontakt der Schleifleisten 23 zu den Fahrdrähten 1 bzw. 2 halten. Die bügelförmige Wippe 22 mit Schleifleisten 23 kann die Oberleitungsanlage auch sicher bei 80 bis 100 km/h Fahrgeschwindigkeit befahren.

## Patentansprüche

1. Nicht schienengebundenes Fahrzeug (10), insbesondere Lastkraftwagen oder Bus, umfassend einen Stromabnehmer (20) zur Einspeisung elektrischer Energie aus einer wenigstens einen Fahrdraht (1, 2) aufweisenden Oberleitungsanlage, wobei der Stromabnehmer (20) mindestens eine Schleifleiste (23) mit einem Arbeitsbereich (b) zur Kontaktierung des wenigstens einen Fahrdrahtes (1, 2) aufweist, mit dem Stromabnehmer (20) gekoppelte Aktormittel (30) zum Verstellen der mindestens einen Schleifleiste (23), wobei die mindestens eine Schleifleiste (23) waagerecht ausgerichtet und quer zu einer Fahrzeuglängsachse (11) verstellbar ist, Sensormittel (40) zur Erfassung der Lage des Fahrzeuges (10) relativ zum wenigstens einen Fahrdraht (1, 2), und eine mit den Sensormitteln (40) und den Aktormitteln (30) verbundene Steuereinrichtung (50), die dazu ausgebildet ist, die Aktormittel (30) in Abhängigkeit der von den Sensormitteln (40) erfassten Fahrzeuglage derart anzusteuern, dass die mindestens eine Schleifleiste (23) den Kontakt zum wenigstens einen Fahrdraht (1, 2) innerhalb ihres Arbeitsbereiches (b) hält, **dadurch gekennzeichnet, dass** die Aktormittel (30) einen Stellantrieb (31) und eine linear geführte Stellstange (32) aufweisen, wobei die Stellstange (32) mit dem Stromabnehmer (20) gekoppelt und mittels des Stellantriebes (31) quer zur Fahrzeuglängsachse (11) verschiebbar ist.

2. Nicht schienengebundenes Fahrzeug (10) nach Anspruch 1, wobei der Stromabnehmer (20) zwei Tragholme (21) aufweist, welche derart drehbar am Fahrzeug (10) angelenkt sind, dass sie in einer gemeinsamen Schwenkebene (12) geführt quer zur Fahrzeuglängsachse (11) schwenkbar sind, wobei die Tragholme (21) gelenkig mit einer die mindestens eine Schleifleiste (23) tragenden Wippe (22) verbunden sind.

3. Nicht schienengebundenes Fahrzeug (10) nach Anspruch 1 oder 2, wobei die Aktormittel (30) eine Messeinrichtung (31) zur Bestimmung einer Aktorstellung aufweisen, wobei die Steuereinrichtung (50) mit der Messeinrichtung (31) verbunden ist, um die Aktormittel (30) auch in Abhängigkeit der bestimmten Aktorstellung anzusteuern.

4. Nicht schienengebundenes Fahrzeug (10) nach einem der Ansprüche 1 bis 3, wobei die Steuereinrichtung (50) dazu ausgebildet ist, die Aktormittel (30) derart anzusteuern, dass die mindestens eine Schleifleiste (23) über ihren Arbeitsbereich (b) pendelnd verstellt wird.

5. Nicht schienengebundenes Fahrzeug (10) nach einem der Ansprüche 1 bis 4, wobei die Steuereinrichtung (50) mit einem Fahrerassistenzsystem verbunden ist, durch welches in Abhängigkeit der bestimmten Aktorstellung und/oder der erfassten Fahrzeuglage eine Lenkempfehlung an einen Fahrer ausgebbar ist und/oder ein automatischer Lenkeingriff vornehmbar ist.

6. Nicht schienengebundenes Fahrzeug (10) nach einem der Ansprüche 1 bis 5, wobei die Sensormittel (40) wenigstens ein Messgerät (41) zur Bestimmung einer Feldstärke (H) eines vom wenigstens einen Fahrdraht (1, 2) erzeugten physikalischen Feldes, insbesondere eines magnetischen Feldes oder eines elektrischen Feldes oder eines elektromagnetischen Wechselfeldes, aufweist.

7. Nicht schienengebundenes Fahrzeug (10) nach Anspruch 6, wobei das physikalische Feld durch die Energieeinspeisung in die Oberleitungsanlage zur Traktionsversorgung des Fahrzeugs (10) erzeugt ist.

8. Nicht schienengebundenes Fahrzeug (10) nach Anspruch 6 oder 7, wobei das physikalische Feld durch zusätzlich in den wenigstens einen Fahrdraht (1, 2) eingeprägte Spannungen oder Ströme erzeugt ist.

9. Nicht schienengebundenes Fahrzeug (10) nach einem der Ansprüche 6 bis 8, wobei das physikalische Feld durch an der Oberleitungsanlage angeordnete Sendeeinheiten erzeugt ist.

10. Nicht schienengebundenes Fahrzeug (10) nach einem der Ansprüche 6 bis 9, wobei der Stromabnehmer (20) zur Einspeisung elektrischer Energie aus einer zwei Fahrdrähte (1, 2) aufweisenden Oberleitungsanlage ausgebildet ist, wobei die Sensormittel (40) zwei in einem Querabstand (1) voneinander angeordnete Messgeräte (41) zur Feldstärkebestimmung aufweisen, wobei der Querabstand (1) verschieden vom Abstand (d) zwischen den Fahrdrähten (1, 2) ist.

## Claims

1. Non-rail-bound vehicle (10), in particular a truck or bus, comprising a current collector (20) for feeding in electrical energy from an overhead line installation having at least one contact wire (1, 2), wherein the current collector (20) has at least one contact strip (23) with a working range (b) for making contact with the at least one contact wire (1, 2), actuating means (30) which are coupled to the current collector (20) for adjusting the at least one contact strip (23), wherein the at least one contact strip (23) is oriented horizontally and can be adjusted transversely with respect to a vehicle longitudinal axis (11), sensor means (40) for sensing the position of the vehicle (10) relative to the at least one contact wire (1, 2), and a control device (50) which is connected to the sensor means (40) and the actuating means (30) and is designed to actuate the actuating means (30) as a function of the vehicle position sensed by the sensor means (40), in such a way that the at least one contact strip (23) maintains the contact with the at least one contact wire (1, 2) within its working range (b), **characterised in that** the actuating means (30) have an actuator (31) and a linear actuator rod (32), wherein the actuator rod (32) is coupled to the current collector (20) and can be displaced transversely with respect to the vehicle longitudinal axis (11) by means of the actuator (31).

2. Non-rail-bound vehicle (10) according to claim 1, wherein the current collector (20) has two support arms (21) which are articulated and can be rotated on the vehicle (10) in such a way that they can be swivelled transversely with respect to the vehicle longitudinal axis (11) in a common swivel plane (12), the support arms (21) being connected in articulated fashion to a rocker (22) bearing the at least one contact strip (23).

3. Non-rail-bound vehicle (10) according to claims 1 or 2, wherein the actuating means (30) have a measuring device (31) for determining an actuator position, the control device (50) being connected to the measuring device (31) to also actuate the actuating means (30) as a function of the specific actuator position.

4. Non-rail-bound vehicle (10) according to one of claims 1 to 3, wherein the control device (50) is designed to actuate the actuating means (30) in such a way that the at least one contact strip (23) is oscillated over its working range (b).

5. Non-rail-bound vehicle (10) according to one of claims 1 to 4, wherein the control device (50) is connected to a driver assistance system, by means of which a steering recommendation can be issued to a driver and/or an automatic steering intervention can be undertaken as a function of the specific actuator position and/or the sensed vehicle position.

6. Non-rail-bound vehicle (10) according to one of claims 1 to 5, wherein the sensor means (40) has at least one measuring device (41) for determining a field strength (H) of a physical field, in particular a magnetic field or an electrical field or an alternating electromagnetic field, generated by the at least one contact wire (1, 2).

7. Non-rail-bound vehicle (10) according to claim 6, wherein the physical field is generated by the power supply to the overhead line installation for the traction current supply of the vehicle (10).

8. Non-rail-bound vehicle (10) according to claim 6 or 7, wherein the physical field is generated by voltages or currents additionally impressed into the at least one contact wire (1, 2).

9. Non-rail-bound vehicle (10) according to one of claims 6 to 8, wherein the physical field is generated by transmitter units arranged on the overhead line installation.

10. Non-rail-bound vehicle (10) according to one of claims 6 to 9, wherein the current collector (20) for feeding in electrical energy is formed by an overhead line installation having two contact wires (1, 2), the sensor means (40) having two measuring devices (41) at a transverse distance (1) from each other for field strength determination, the transverse distance (1) being different from the distance (d) between the contact wires (1, 2).

## Revendications

1. Véhicule (10) non ferroviaire, notamment camion ou autobus, comprenant un pantographe (20) d'injection d'énergie électrique à partir d'un système à ligne de contact, ayant au moins un fil (1, 2) de contact, le pantographe (20) ayant au moins une réglette (23) de frottement, ayant une plage (b) de travail pour venir en contact avec le au moins un fil (1, 2) de contact, des moyens (30) d'actionneur couplés au pantographe (20), pour le déplacement de la au moins une réglette (23) de frottement, la au moins une réglette (23) de frottement étant dirigée horizontalement et pouvant être déplacée transversalement à un axe (11) longitudinal du véhicule, des moyens (44) de capteur, pour détecter la position du véhicule 10 par rapport à au moins un fil (1, 2) de contact et un dispositif (50) de commande relié aux moyens (40) de capteur et aux moyens (30) d'actionneur, qui sont constitués pour commander les moyens (30) d'actionneur en fonction de la position du véhicule détecté par les moyens (40) de capteur, de manière à ce que la au moins une réglette (30) de frottement conserve, dans sa plage (b) de travail, le contact avec le au moins un fil (1, 2) de contact, **caractérisé en ce que** les moyens (30) d'actionneur ont un organe (31) moteur et une barre (32) de déplacement linéaire, la barre (32) de déplacement étant couplée au pantographe (20) et pouvant être déplacée transversalement à l'axe (11) longitudinal du véhicule, au moyen de l'organe (31) moteur.

2. Véhicule (10) non ferroviaire suivant la revendication 1, dans lequel le pantographe (20) a deux bras (21) porteurs, articulés en rotation au véhicule (10), de manière à pouvoir pivoter transversalement à l'axe (11) longitudinal du véhicule, en étant guidé dans un plan (12) de pivotement commun, les bras (21) porteurs étant articulés à un archet (22) portant la au moins une réglette (23) de frottement.

3. Véhicule (10) non ferroviaire suivant la revendication 1 ou 2,
dans lequel les moyens (30) d'actionneur ont un dispositif (31) de mesure pour déterminer une position d'actionneur, le dispositif (50) de commande étant relié au dispositif (31) de mesure pour commander les moyens (30) d'actionneur, également en fonction de la position déterminée de l'actionneur.

4. Véhicule (10) non ferroviaire suivant l'une des revendications 1 à 3,
dans lequel le dispositif (50) de commande est constitué pour commander les moyens (30) d'actionneur de manière à déplacer pendulairement la au moins une réglette (23) de frottement sur sa plage (b) de travail.

5. Véhicule (10) non ferroviaire suivant l'une des revendications 1 à 4,
dans lequel le dispositif (50) de commande est relié à un système d'assistance à la conduite, par lequel il peut être donné à un conducteur, en fonction de la position de l'actionneur déterminée et/ou de la position du véhicule détectée, une recommandation de conduite et/ou il peut s'effectuer une intervention automatique sur la conduite.

6. Véhicule (10) non ferroviaire suivant l'une des revendications 1 à 5,
dans lequel les moyens (40) de capteur ont au moins un appareil (41) de mesure pour la détermination d'une intensité (H) d'un champ physique, produite par le au moins un fil (1, 2) de contact, notamment d'un champ magnétique ou d'un champ électrique ou d'un champ alternatif électromagnétique.

7. Véhicule (10) non ferroviaire suivant la revendication 6, dans lequel le champ physique est produit par l'alimentation en énergie de l'installation à ligne de contact pour l'alimentation en traction du véhicule (10).

8. Véhicule (10) non ferroviaire suivant la revendication 6 ou 7,
dans lequel le champ physique est produit par des tensions ou des courants appliqués supplémentairement au au moins un fil (1, 2) de contact.

9. Véhicule (10) non ferroviaire suivant l'une des revendications 6 à 8,
dans lequel le champ physique est produit par des unités d'émission montées sur l'installation à ligne de contact.

10. Véhicule (10) non ferroviaire suivant l'une des revendications 6 à 9,
dans lequel le pantographe (20) est constitué pour injecter de l'énergie électrique à partir d'une installation de ligne de contact ayant deux fils (1,2) de contact, les moyens (40) de capteur ayant, pour la détermination de l'intensité du champ, deux appareils (41) de mesure montés à distance (1) transversale l'un de l'autre, la distance (1) transversale étant différente de la distance (d) entre les fils (1, 2) de contact.
